# EUROPEAN PATENT APPLICATION

(11) **EP 4 527 592 A1**
(43) Date of publication of application: **26.03.2025**
(21) Application number: 23198761.1
(22) Date of filing: 21.09.2023
(51) Int. Cl.: B29C 64/118, B29C 64/227, B29C 64/245, B33Y 30/00, B29C 64/241, B33Y 70/10, B33Y 10/00

(54) **MACHINE AND METHOD FOR ADDITIVE MANUFACTURING**

(71) Applicant: Caracol S.r.l., 22074 Lomazzo (CO) (IT)
(72) Inventor: AVALLONE, Giovanni, 22074 Lomazzo (CO) (IT); VANERIO, Daniele, 22074 Lomazzo (CO) (IT)
(74) Representative: Studio Torta S.p.A.

(57) **Abstract**

An additive manufacturing machine for producing objects has an upper supporting frame (3); a workpiece table (4) arranged at a variable distance from the upper supporting frame (3) along a central axis (A), configured to support the object (2) and rotate around the central axis (A); a plurality of nozzles (5, 6, 7, 8, 9) facing the workpiece table (4) and configured to deliver fused material; a first actuation assembly (10) configured to actuate rotation of the workpiece table (4); a second actuation assembly (11) configured to adjust the distance between the workpiece table (4) and the upper supporting frame (3); and a control unit (12) configured to control in a coordinated manner the first and the second actuation assembly (10, 11) so that the fused material delivered is arranged along a respective profile which is preferably substantially helical.

## Description

### TECHNICAL FIELD

The present invention concerns a machine and a method for additive manufacturing.

### STATE OF THE ART

As known, additive manufacturing is used to make products and semi-finished products, also in large sizes, that need to be lightweight and strong, and have complex geometries such as, for example, bodies and frames in the nautical, aeronautical and automotive sector, machinery components and architectural structures, starting from a file of a digital three-dimensional model produced by a CAD modelling system.

The present invention refers to additive manufacturing techniques based on the use of a printing head provided with an extruder having a nozzle out of which fused material flows.

By way of example, additive manufacturing techniques are known that use Fused Deposition Modelling (FDM) or Fused Filament Fabrication (FFF) or Fused Granular Fabrication (FGF).

The fused material coming out of the extrusion nozzle is deposited in layers on a work surface, according to a predefined three-dimensional model. Once deposited by the nozzle, the layer of fused material solidifies and binds with an adjacent layer of material. The succession of overlapping layers thus creates a single solid structure or final object having the desired form.

In particular, by way of example, to make tubular objects by means of additive manufacturing techniques, the nozzle has to be moved in the space between the inner diameter and the outer diameter of the tubular object so as to deposit overlapped layers of fused material to form an inner profile, an outer profile and a stiffening mesh between the inner profile and the outer profile.

However, during deposition of the fused material by known additive manufacturing techniques, the nozzle has to pass between the inner profile, the stiffening mesh and the outer profile. Said passage determines local overlapping of the layers of fused material deposited, causing overlap defects in the structure of the object manufactured which negatively affect the mechanical characteristics and, in particular, the surface finish thereof.

Furthermore, the need to carry out said passage limits the production speed of the object.

### SUMMARY OF THE INVENTION

An object of the present invention is to produce an additive manufacturing machine that mitigates the drawbacks of the known art highlighted here.

In accordance with the present invention, an additive manufacturing machine is produced for making objects in a preferably polymeric or composite material, the machine comprising:
- an upper supporting frame;
- a workpiece table, which is configured to support the object being manufactured, is arranged at a variable distance from the upper supporting frame along a central axis, and is configured to rotate around the central axis;
- a plurality of nozzles, which are coupled to the upper supporting frame, face the workpiece table and are configured to deliver fused material preferably of polymeric or composite type;
- a first actuation assembly configured to actuate rotation of the workpiece table around the central axis;
- a second actuation assembly configured to adjust the distance between the workpiece table and the upper supporting frame along the central axis; and
- a control unit configured to control in a coordinated manner the first and the second actuation assembly so that the fused material delivered is arranged along a respective profile which is preferably substantially helical.

Thanks to the present invention, it is possible to make each profile of the object by means of a given dedicated nozzle without the need for the nozzles to pass from a given profile to a further profile of the object during delivery of the fused material. In this way, it is possible to avoid overlap defects and, consequently, preserve the mechanical characteristics of the object manufactured.

By way of example, it is possible to deposit fused material along an inner profile of the object to be manufactured by means of a first nozzle and along an outer profile of said object by means of a second nozzle.

Furthermore, since the nozzles are configured to deliver fused material in a simultaneous manner, it is possible to increase the production speed of the object.

In particular, the workpiece table is movable along the central axis relative to the upper supporting frame; the second actuation assembly being configured to actuate sliding of the workpiece table along the central axis.

In practice, during production of the object, it is possible to lower the workpiece table along the central axis while the workpiece table rotates around the central axis so that the fused material delivered creates the respective profile.

In particular, each nozzle is coupled to the upper supporting frame at a distance from the central axis so that the profile created by each nozzle develops around the central axis.

In further detail, the distance between each nozzle and the central axis is adjustable.

In this way, it is possible to create by means of the same nozzle substantially helical profiles having different diameters.

In particular, at least one nozzle of the plurality of nozzles is movable, preferably in an alternating manner, in a direction substantially perpendicular to the central axis so as to vary the distance of said nozzle from the central axis during rotation of the workpiece table around the central axis.

In this way, it is possible to create a substantially helical profile having a given form.

In particular, the machine comprises a third actuation assembly configured to actuate sliding of each nozzle in a direction substantially perpendicular to the central axis.

In further detail, the third actuation assembly comprises for each nozzle a linear guide, which is coupled to the upper supporting frame and extends in a direction substantially perpendicular to the central axis to guide sliding of the respective nozzle; and an actuator for each nozzle configured to actuate sliding of each nozzle along the respective guide.

In this way, it is possible to simply and accurately control the distance of each nozzle from the central axis during rotation of the workpiece table around the central axis.

In accordance with one embodiment, the machine comprises a first nozzle coupled to the upper supporting frame at a first distance from the central axis so as to create an inner profile of the object; and a second nozzle coupled to the upper supporting frame at a second distance from the central axis greater than the first distance so as to create an outer profile of the object.

In practice, it is possible to create each profile in a simple effective manner by means of two dedicated nozzles, without the need for one nozzle to pass from the inner profile to the outer profile or vice versa.

In particular, the machine comprises a third nozzle coupled to the upper supporting frame in a movable manner in a direction substantially perpendicular to the central axis between the first distance and the second distance so as to produce a first stiffening mesh between the inner profile and the outer profile of the object to be manufactured.

In this way, it is possible to create the stiffening mesh between the inner profile and the outer profile of the object to be manufactured by means of a third dedicated nozzle in a simple effective manner.

In particular, the machine comprises a plurality of lateral support elements, each of which is configured to be positioned in contact with the object being manufactured so as to maintain said object aligned with the central axis on the workpiece table.

Thanks to the lateral support elements, it is possible to guarantee adequate overlapping of the layers of fused material delivered so that the object being manufactured develops in a centred manner around the central axis.

In particular, the machine comprises a heating system configured to heat the object being manufactured.

Thanks to the heating system, it is possible to obtain optimal characteristics in terms of both mechanical properties and surface finish of the object manufactured.

In further detail, the heating system comprises an air supply duct, a fan configured to generate an air flow inside the duct, and a heating element configured to transmit heat to the air flow inside the duct; the duct being provided with an outlet, which is arranged near the object being manufactured and is shaped to direct said heated air flow towards the object being manufactured.

In this way, it is possible to minimise the energy required to maintain the air in temperature and, at the same time, maintain the inner surface of the object being manufactured at a constant temperature so as to promote optimal mechanical characteristics.

A further object of the present invention is to provide an additive manufacturing method that mitigates the drawbacks of the known art highlighted here.

In accordance with the present invention, an additive manufacturing method is provided for manufacturing objects in a preferably polymeric or composite material by means of an additive manufacturing machine, the method comprising the steps of:
- sustaining a plurality of nozzles by means of an upper supporting frame of the additive manufacturing machine;
- supporting the object being manufactured by means of a workpiece table facing the nozzles;
- delivering fused material by means of each nozzle of the plurality of nozzles; and
- controlling in a coordinated manner a rotation of the workpiece table around a central axis and a variation of the distance of the workpiece table from the upper supporting frame along the central axis so that the fused material delivered is arranged along a respective profile which is preferably substantially helical.

Thanks to the present method, it is possible to create in a simple rapid manner each profile of the object by means of a dedicated nozzle, avoiding defects due to the passage of a nozzle from one profile to the other and consequently preserving the mechanical and surface finish characteristics of the object manufactured.

### BRIEF DESCRIPTION OF THE DRAWINGS

Further characteristics and advantages of the present invention will become clear from the following description of non-limiting embodiment examples thereof, with reference to the Figures of the attached drawings, in which:
- Figure 1 is a perspective view, with parts removed for clarity, of an additive manufacturing machine produced in accordance with the present invention;
- Figure 2 is a plan view, with parts removed for clarity, of the machine of Figure 1;
- Figure 3 is a perspective view, with parts removed for clarity, of a detail of the machine of Figure 1;
- Figure 4 is a schematic view, with parts removed for clarity, of a heating system of the machine of Figure 1; and
- Figures 5-8 are schematic views of further details of respective embodiments of the machine of Figure 1.

### DETAILED DISCLOSURE OF THE INVENTION

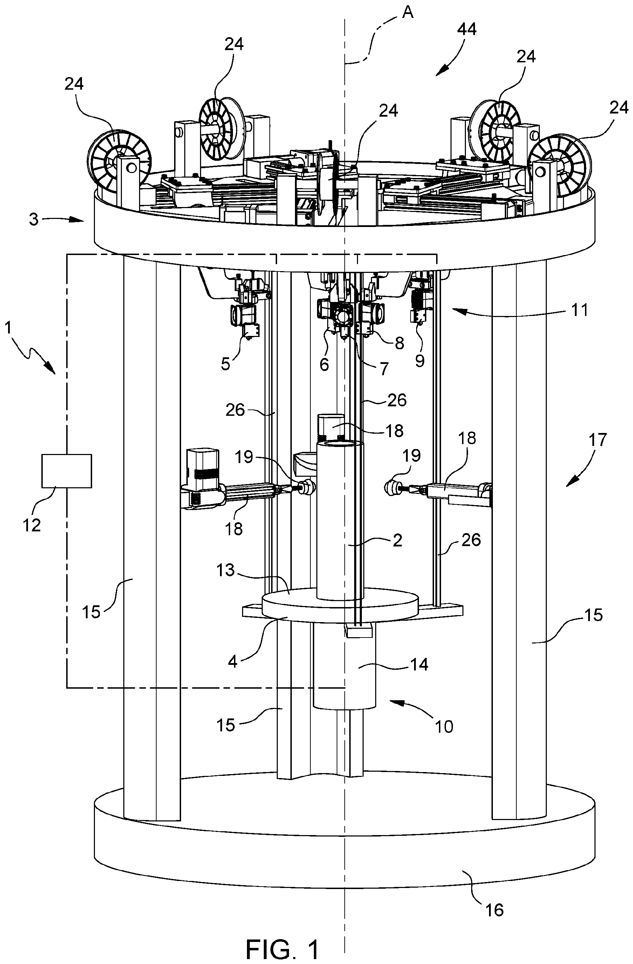

With reference to Figure 1, the reference number 1 indicates overall an additive manufacturing machine used for manufacturing objects 2 made of a preferably polymeric or composite material.

In the non-limiting case of the present invention described and illustrated here, the machine 1 is used for producing tubular objects 2.

It is understood that the machine 1 can be used to produce objects 2 having other shapes and dimensions.

In accordance with a non-limiting embodiment of the present invention, the machine 1 is used for manufacturing objects 2 made of a fibre-reinforced composite material with polymer matrix.

In further detail, the machine 1 is of the Fused Deposition Modelling (FDM) or Fused Filament Fabrication (FFF) or Fused Granular Fabrication (FGF) type and uses a three-dimensional model of the object 2 to be manufactured.

The machine 1 comprises an upper supporting frame 3; a workpiece table 4, which is configured to support the object 2 being manufactured, is arranged at a variable distance from the upper supporting frame 3 along a central axis A, and is configured to rotate around the central axis A; a plurality of nozzles 5, 6, 7, 8, 9, which are coupled to the upper supporting frame 3, face the workpiece table 4 and are configured to deliver fused material onto the workpiece table 4; an actuation assembly 10 configured to actuate rotation of the workpiece table 4 around the central axis A; an actuation assembly 11 configured to adjust the distance between the workpiece table 4 and the upper supporting frame 3 along the central axis A; and a control unit 12 configured to control in a coordinated manner the actuation assembly 10 and the actuation assembly 11 so that the fused material delivered is arranged along a respective profile which is preferably substantially helical.

In the present description, the term "helical profile" indicates a curve that spatially develops along the central axis A and which in a plan view presents a closed profile around the central axis A of given shape. In particular, in plan view the given shape of the helical profile can be a circumference or a contour of irregular shape.

In further detail, each nozzle 5, 6, 7, 8 and 9 is coupled to the upper supporting frame 3 at a distance from the central axis A.

In the case described and illustrated here, the machine 1 comprises five nozzles 5, 6, 7, 8 and 9.

It is understood that the number of nozzles 5, 6, 7, 8 and 9 is purely an example and can vary according to the specific type of object to be manufactured. By way of example, the machine 1 can comprise two to four nozzles or more than five nozzles.

In particular, the central axis A extends in a substantially vertical direction.

The workpiece table 4 is movable along the central axis A relative to the upper supporting frame 3 and comprises a support surface 13 which faces the upper supporting frame 3 and is configured to support the object 2 being manufactured.

Furthermore, the workpiece table 4 is coupled to the upper supporting frame 3 in a revolving manner around the central axis A and is configured to translate along the central axis A so as to vary the distance from the upper supporting frame 3. In practice, each point of the support surface 13 located at a distance from the central axis A spatially travels a helical trajectory when the workpiece table 4 rotates around the central axis A and simultaneously moves along the central axis A.

In accordance with one embodiment, the actuation assembly 10 communicates with the control unit 12 and comprises an actuator 14, preferably an electric motor, configured to actuate rotation of the workpiece table 4 around the central axis A.

In the non-limiting case of the present invention described and illustrated here, the machine 1 comprises a plurality of lateral uprights 15, each of which extends in a direction substantially parallel to the central axis A and sustains the upper supporting frame 3. In particular, the machine 1 comprises a lower base 16 to which each lateral upright 15 of the plurality of lateral uprights 15 is fixed.

In other words, the upper supporting frame 3, the plurality of lateral uprights 15 and the lower base 16 form the fixed structure 17 of the machine 1.

Furthermore, the machine 1 comprises a plurality of lateral support elements 18, each of which is configured to be positioned in contact with the object 2 being manufactured so as to keep the object 2 aligned with the central axis A on the workpiece table 4.

In particular, each lateral support element 18 is coupled to a respective lateral upright 15, is extendable in a direction substantially perpendicular to the central axis A and comprises a contact point 19, which is arranged at an end of the lateral support element 18 and is configured to come into contact with the outer surface of the object 2 being manufactured.

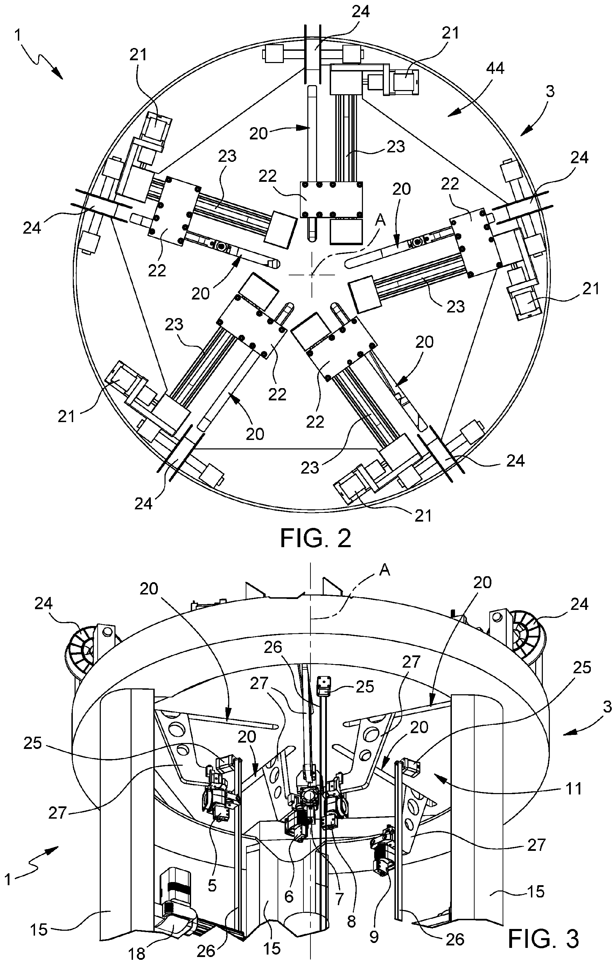

With reference to Figure 2, the distance between each nozzle 5, 6, 7, 8 and 9 and the central axis A is adjustable.

In particular, each nozzle 5, 6, 7, 8 and 9 is movable in an alternating manner in a direction substantially perpendicular to the central axis A so as to vary the distance of the nozzle 5, 6, 7, 8 and 9 from the central axis A during rotation of the workpiece table 4 around the central axis A.

In accordance with one embodiment, said directions are distributed around the central axis A in a substantially equidistant manner.

The machine 1 comprises an actuation assembly 44 configured to actuate sliding of each nozzle 5, 6, 7, 8, 9 in a direction substantially perpendicular to the central axis A.

In further detail, the actuation assembly 44 comprises for each nozzle 5, 6, 7, 8 and 9 a linear guide 20, which is coupled to the upper supporting frame 3 and extends in a direction substantially perpendicular to the central axis A to guide sliding of the respective nozzle 5, 6, 7, 8 and 9; and an actuator 21 for each nozzle 5, 6, 7, 8 and 9 configured to actuate the sliding of each nozzle 5, 6, 7, 8 and 9 along the respective linear guide 20.

In the case described and illustrated here, each linear guide 20 comprises a through slit obtained in the upper supporting frame 3.

In accordance with one non-limiting embodiment of the present invention, each actuator 21 comprises an electric motor.

Furthermore, the actuation assembly 44 comprises for each nozzle 5, 6, 7, 8, 9 a slide 22 sliding along the respective linear guide 20.

In particular, each linear guide 20 comprises a drive belt 23, which is coupled to the respective actuator 21, extends along the respective linear guide 20 and is connected to the respective slide 22 so as to transmit the motion from the actuator 21 to the slide 22.

In accordance with an alternative embodiment, not shown in the attached Figures, each linear guide 20 comprises a transmission mechanism of the screw-nut screw type to transmit the motion from each actuator 21 to the respective slide 22.

In accordance with a non-limiting embodiment of the present invention, each nozzle 5, 6, 7, 8 and 9 is of the fused filament type and comprises a heating element, not shown in the attached Figures, configured to fuse a filament of polymeric or composite material. In particular, the machine 1 comprises a reel 24 of polymer filament for each nozzle 5, 6, 7, 8 and 9.

With reference to Figure 3, the actuation assembly 11 is configured to actuate sliding of the workpiece table 4 along the central axis A and comprises a plurality of actuators 25, each of which is sustained by the upper supporting frame 3; and a drive element 26 for each actuator 25, which is connected to the respective actuator 25 and to the workpiece table 4 so as to transmit to the workpiece table 4 a translation motion along the central axis A.

In the non-limiting case of the present invention described and illustrated here, each drive element 26 comprises a belt.

In accordance with an alternative embodiment, not shown in the attached Figures, each drive element 26 comprises a respective shaft, which supports the workpiece table 4, and a screw-nut screw mechanism, which is configured to transmit a translation motion in a direction substantially parallel to the central axis A.

Furthermore, the machine 1 comprises for each nozzle 5, 6, 7, 8 and 9 a respective support arm 27, which is fixed to the respective slide 22 (Figure 2), extends between the upper supporting frame 3 and the workpiece table 4, and supports the respective nozzle 5, 6, 7, 8 and 9.

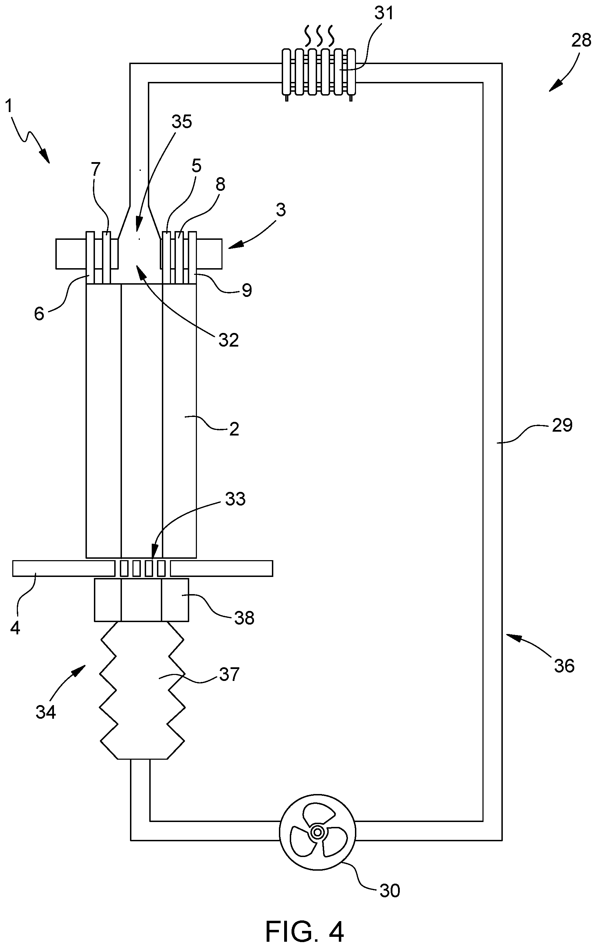

With reference to Figure 4, the machine 1 comprises a heating system 28 configured to heat the object 2 being manufactured.

The heating system 28 comprises a duct 29 for the air supply, a fan 30 configured to generate an air flow inside the duct 29, and a heating element 31 configured to transmit heat to the air flow inside the duct 29. The duct 29 is provided with an outlet opening 32, which is arranged near the object 2 being manufactured and is shaped to direct said heated air flow towards the object 2 being manufactured.

By way of example, the heating element 31 can comprise a liquid heat exchanger and/or an electrical resistor.

In accordance with a non-limiting embodiment of the present invention, the workpiece table 4 has a through opening 33, in particular made in a central portion of the workpiece table 4. The duct 29 comprises an inlet portion 34, which is fluidically connected to the through opening 33 and is configured to allow the entry of air into the duct 29.

In particular, the upper supporting frame 3 has a through opening 35, through which the duct 29 passes. In practice, the outlet opening 32 is directly facing the object 2 being manufactured.

In this way, the heating system 28 creates a closed circuit 36 for the heated air supply, which is configured to feed the heated air flow from the outlet opening 32 to the inlet portion 34 through the object being manufactured.

If the object 2 being manufactured has a tubular shape, the heated air flow is conveyed from the inlet opening 32 to the inlet portion 34, passing through an inner channel of the tubular object 2.

In other words, said inner channel of the tubular object 2 fluidically connects the inlet opening 32 to the inlet portion 34 of the duct 29 so as to create the closed circuit 36.

In the non-limiting case of the present invention described and illustrated here, the inlet portion 34 comprises a flexible coupling 37 and a rotating joint 38, which is arranged between the flexible coupling 37 and the workpiece table 4 and is configured to uncouple the flexible coupling 37 from the rotation of the workpiece table 4 around the central axis A.

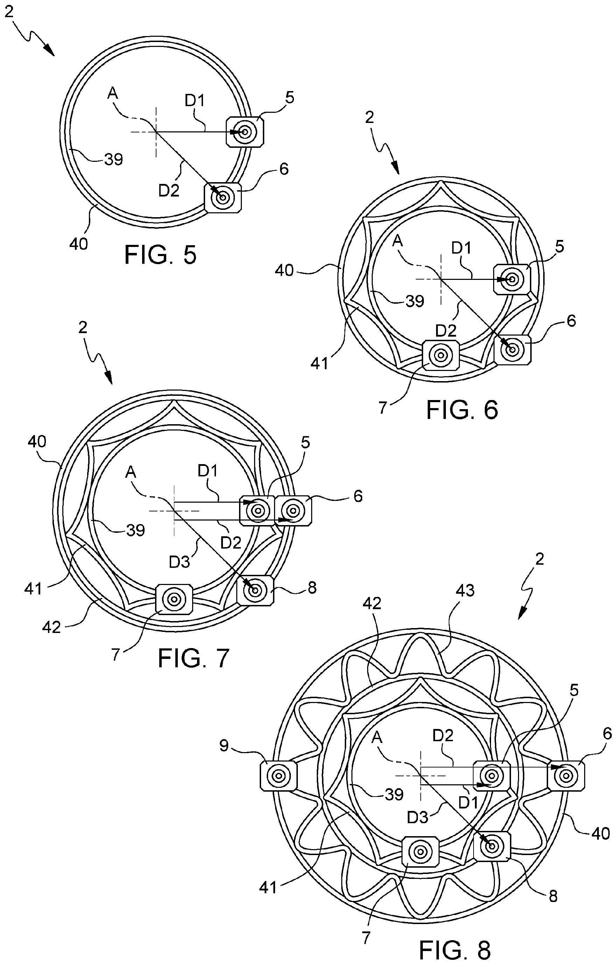

With reference to Figure 5, a first embodiment of the present invention is shown, in which the machine 1 is provided with two nozzles 5 and 6.

The nozzle 5 is coupled to the upper supporting frame 3 at a distance D1 from the central axis A so as to create an inner profile 39 of the object 2. The nozzle 6 is coupled to the upper supporting frame 3 at a distance D2 from the central axis A greater than the distance D1 so as to create an outer profile 40 of the object 2.

With reference to Figure 6, a second embodiment of the present invention is shown, in which the machine 1 is provided with three nozzles 5, 6 and 7.

The nozzle 7 is coupled to the upper supporting frame 3 in a movable manner in a direction substantially perpendicular to the central axis A between the distance D1 and the distance D2 so as to create a stiffening mesh 41 between the inner profile 39 and the outer profile 40.

With reference to Figure 7, a third embodiment of the present invention is shown, in which the machine 1 is provided with four nozzles 5, 6, 7 and 8.

The nozzle 8 is coupled to the upper supporting frame 3 at a distance D3 from the central axis A greater than the distance D1 and smaller than the distance D2 so as to create an intermediate profile 42 of the object 2.

In particular, the nozzle 7 is movable between the distance D1 and the distance D3 so as to create the stiffening mesh 41 between the inner profile 39 and the intermediate profile 42.

In the non-limiting case of the present invention described and illustrated here, the inner profile 39, the outer profile 40 and the intermediate profile 42 have a substantially circular shape.

With reference to Figure 8, a fourth embodiment of the present invention is shown, in which the machine 1 is provided with five nozzles 5, 6, 7, 8 and 9.

The nozzle 9 is coupled to the upper supporting frame 3 in a movable manner in a direction substantially perpendicular to the central axis A between the distance D3 and the distance D2 so as to create a stiffening mesh 43 between the intermediate profile 42 and the outer profile 40.

In use and with reference to Figures 1 and 2, the control unit 12 sends a control signal to the actuation assembly 11 to move the workpiece table 4 along the central axis A towards the upper supporting frame 3 so as to arrange the support surface 13 in the area of the nozzles 5, 6, 7, 8 and 9.

Each actuator 21 moves the respective nozzle 5, 6, 7, 8 and 9 along the respective linear guide 20 so as to adjust the distance between the respective nozzle 5, 6, 7, 8 and 9 and the central axis A.

At this point, each nozzle 5, 6, 7, 8 and 9 begins delivering the fused material on the support surface 13 and simultaneously the control unit 12 controls in a coordinated manner the actuation assembly 10 and the actuation assembly 11 so as to rotate the workpiece table 4 around the central axis A and move the workpiece table 4 along the central axis A away from the upper supporting frame 3.

Since each nozzle 5, 6, 7, 8 and 9 is arranged at a distance from the central axis A, during rotation of the workpiece table 4 around the central axis A, the fused material delivered by each nozzle 5, 6, 7, 8 and 9 describes respective helical profiles that develop around the central axis A.

With reference to Figure 2, the actuators 21 actuate alternate sliding of the respective nozzles 7 and 9 along the respective linear guides 20 so that, with reference to Figure 7, the fused material delivered by the nozzles 7 and 9 creates the stiffening meshes 41 and 43 respectively.

In this way, overlapping of the layers of fused material is carried out according to a predefined three-dimensional model stored in the control unit 12 and determines development of the object 2 along the central axis A.

Lastly, it is evident that the present invention comprises further variations of the embodiments described included in the protective scope of the attached claims.

## Claims

1. An additive manufacturing machine for producing objects in a preferably polymeric or composite material, the machine (1) comprising:
- an upper supporting frame (3);
- a workpiece table (4), which is configured to support the object (2) being manufactured, is arranged at a variable distance from the upper supporting frame (3) along a central axis (A), and is configured to rotate around the central axis (A) ;
- a plurality of nozzles (5, 6, 7, 8, 9), which are coupled to the upper supporting frame (3), face the workpiece table (4) and are configured to deliver fused material, preferably of polymeric or composite type;
- a first actuation assembly (10) configured to actuate rotation of the workpiece table (4) around the central axis (A);
- a second actuation assembly (11) configured to adjust the distance between the workpiece table (4) and the upper supporting frame (3) along the central axis (A); and
- a control unit (12) configured to control in a coordinated manner the first and the second actuation assembly (10, 11) so that the fused material delivered is arranged along a respective profile which is preferably substantially helical.

2. The machine as claimed in claim 1, wherein the central axis (A) extends in a substantially vertical direction.

3. The machine as claimed in claim 1 or 2, wherein the workpiece table (4) is movable along the central axis (A) with respect to the upper supporting frame (3); the second actuation assembly (11) being configured to actuate sliding of the workpiece table (4) along the central axis (A).

4. The machine as claimed in any one of the preceding claims, wherein each nozzle (5, 6, 7, 8, 9) is coupled to the upper supporting frame (3) at a distance from the central axis (A).

5. The machine as claimed in claim 4, wherein the distance between each nozzle (5, 6, 7, 8, 9) and the central axis (A) is adjustable.

6. The machine as claimed in any one of the preceding claims, wherein at least one nozzle (5, 6, 7, 8, 9) of the plurality of nozzles (5, 6, 7, 8, 9) is movable, preferably in an alternating manner, in a direction substantially perpendicular to the central axis (A) so as to vary the distance of said nozzle (5, 6, 7, 8, 9) from the central axis (A) during rotation of the workpiece table (4) around the central axis (A).

7. The machine as claimed in claim 6, comprising a third actuation assembly (44) configured to actuate the sliding of each nozzle (5, 6, 7, 8, 9) in a direction substantially perpendicular to the central axis (A).

8. The machine as claimed in claim 7, wherein the third actuation assembly (44) comprises for each nozzle (5, 6, 7, 8, 9) a linear guide (20), which is coupled to the upper supporting frame (3) and extends in a direction substantially perpendicular to the central axis (A) to guide sliding of the respective nozzle (5, 6, 7, 8, 9); and an actuator (21) for each nozzle (5, 6, 7, 8, 9) configured to actuate the sliding of each nozzle (5, 6, 7, 8, 9) along the respective linear guide (20).

9. The machine as claimed in claim 8, wherein the third actuation assembly (44) comprises for each nozzle (5, 6, 7, 8, 9) a slide (22) that can slide along the respective linear guide (20); and a support arm (27) which is fixed to the respective slide (22), extends between the upper supporting frame (3) and the workpiece table (4) and supports the respective nozzle (5, 6, 7, 8, 9).

10. The machine as claimed in any one of the preceding claims, comprising a first nozzle (5) coupled to the upper supporting frame (3) at a first distance (D1) from the central axis (A) so as to create an inner profile (39) of the object (2); and a second nozzle (6) coupled to the upper supporting frame (3) at a second distance (D2) from the central axis (A) greater than the first distance (D1) so as to create an outer profile (40) of the object (2).

11. The machine as claimed in claim 10, comprising a third nozzle (7) coupled to the upper supporting frame (3) in a movable manner in a direction substantially perpendicular to the central axis (A) between the first distance (D1) and the second distance (D2) so as to create a first stiffening mesh (41) between the inner profile (39) and the outer profile (40) of the object (2).

12. The machine as claimed in claim 11, comprising a fourth nozzle (8) coupled to the upper supporting frame (3) at a third distance (D3) from the central axis (A) greater than the first distance (D1) and smaller than the second distance (D2) so as to create an intermediate profile (42) of the object (2); and a fifth nozzle (9) coupled to the upper supporting frame (3) in a movable manner in a direction substantially perpendicular to the central axis (A) between the third distance (D3) and the second distance (D2) so as to create a second stiffening mesh (43) between the intermediate profile (42) and the outer profile (40) of the object (2).

13. The machine as claimed in claim 12, wherein the third nozzle (7) is movable between the first distance (D1) and the third distance (D3) so as to create the first stiffening mesh (41) between the inner profile (39) and the intermediate profile (42) of the object (2).

14. The machine as claimed in any one of the preceding claims, wherein each nozzle (5, 6, 7, 8, 9) is of the fused filament type.

15. The machine as claimed in any one of the preceding claims, comprising a plurality of lateral support elements (18), each of which is configured to be positioned in contact with the object (2) being manufactured so as to maintain said object (2) aligned with the central axis (A) on the workpiece table (4).

16. The machine as claimed in any one of the preceding claims, comprising a heating system (28) configured to heat the object (2) being manufactured.

17. The machine as claimed in claim 16, wherein the heating system (28) comprises an air supply duct (29), a fan (30) configured to generate an air flow inside the duct (29), and a heating element (31) configured to transmit heat to the air flow inside the duct (29); the duct (29) being provided with an outlet opening (32), which is arranged in the vicinity of the object (2) being manufactured and is shaped to direct said heated air flow towards the object (2) being manufactured.

18. An additive manufacturing method for producing objects in a preferably polymeric or composite material by means of an additive manufacturing machine, the method comprising the steps of:
- supporting a plurality of nozzles (5, 6, 7, 8, 9) by means of an upper supporting frame (3) of the additive manufacturing machine (1);
- supporting the object (2) being manufactured by means of a workpiece table (4) facing the nozzles (5, 6, 7, 8, 9);
- delivering fused material via each nozzle (5, 6, 7, 8, 9) of the plurality of nozzles (5, 6, 7, 8, 9); and
- controlling in a coordinated manner a rotation of the workpiece table (4) around a central axis (A) and a variation of the distance of the workpiece table (4) from the upper supporting frame (3) along the central axis (A) so that the fused material delivered is arranged along a respective profile which is preferably substantially helical.

19. The method as claimed in claim 18, comprising the step of adjusting a distance between each nozzle (5, 6, 7, 8, 9) and the central axis (A).

20. The method as claimed in claim 18 or 19, comprising the step of moving, preferably in an alternate manner, at least one nozzle (5, 6, 7, 8, 9) of the plurality of nozzles (5, 6, 7, 8, 9) in a direction substantially perpendicular to the central axis (A) so as to vary the distance of said nozzle (5, 6, 7, 8, 9) from the central axis (A) during rotation of the workpiece table (4) around the central axis (A).
